# EUROPEAN PATENT APPLICATION

(11) **EP 4 497 769 A1**
(43) Date of publication of application: **29.01.2025**
(21) Application number: 23187261.5
(22) Date of filing: 24.07.2023
(51) Int. Cl.: C08G 18/48, C08G 18/76, C08K 3/016, C08K 3/04, C08K 5/521, C08L 75/04, C09K 21/12

(54) **FLAME-RETARDANT POLYURETHANE COMPOSITION**

(71) Applicant: RAMPF Advanced Polymers GmbH & Co. KG, 72661 Grafenberg (DE)
(72) Inventor: LINSENMAYER, Philipp, 72664 Kohlberg (DE); WURSTER, Moriz, 72555 Metzingen (DE)
(74) Representative: Weickmann & Weickmann PartmbB

(57) **Abstract**

The present invention relates to a polyol composition and a reactive polyurethane system comprising same for the manufacture of a polyurethane that is particularly used for fixing electrical components in a container.

## Description

The present invention relates to a polyol composition and a reactive polyurethane system comprising same for the manufacture of a polyurethane that is particularly used for fixing electrical components in a container.

Sensitive electrical components that are continuously subjected to mechanical stress, e.g. in vehicles such as cars, bikes, motorcycles, boats, commercial vehicles, etc., due to vibration and shock are to be held in spatial relationship to assure their function and to avoid undesired noise. Highest priority is to maintain electrical contact between electrical wiring, power source, and electrical devices.

A common approach to protect electrical systems from shock and vibration is their potting in containers thereby replacing cavities within the container (not occupied by the respective components) with shock and vibration absorbing materials. The materials may also be designed such that the electrical components are sealed against moisture, solvents and corrosive agents. The materials might also be used for isolating the electrical components from air to reduce the risk of fire development. Clearly, it is desired that the material is highly flame-resistant such that there is no risk of fire in case the electrical components heat up while in use.

Materials used to form potting compounds vary in their properties (hard, soft, rigid, etc.) and are designed to withstand various environments. Potting compounds used for potting electrical components may be bulk materials, such as elastomers, or foams. Potting compounds that provide best mechanical stability to an electrical component while adding minimal weight are desired.

Battery packs potted in different resins are known from US 2011/250475 and US 2012/0183819.

Potting materials are usually liquid and cure once poured into the cavities within the container. Such materials are known as one or two component systems, such as polyurethane resins or epoxide resins. Since the electrical components become increasingly complex, the remaining spaces in the container are very filigree so that it is difficult to entirely fill up the spaces. Since the liquid potting materials are usually infused from only one inlet, it is decisive that the material has a very low viscosity such that any structure can be reached before curing.

EP 3 753 056 discloses a flame-retardant polyurethane potting composition modified with liquid flame-retardants. The material is said to have low viscosity and sufficient flame retardancy. The flame retardants used are mainly halogenated which is not desired for environmental reasons. Moreover, high amounts of liquid flame retardants disrupt the required mechanical characteristics of the cured resin.

It is therefore a long-felt need to provide potting compositions having sufficient mechanical stability and simultaneously flame-retardancy and fire smothering properties.

Thus, in a first aspect the present invention relates to a polyol composition comprising
(i) at least one polyol,
(ii) at least one of a polyphosphate and phosphinate salt,
(iii) at least one expandable graphite, and
(iv) optionally at least one additive.

In a preferred embodiment, the polyol composition is free of halogens, such as fluorine, chlorine, bromine or iodine, and/or halides.

The polyol refers to a compound that has at least two hydroxy groups, preferably at least two isocyanate-reactive hydroxy groups. In a preferred embodiment, the polyol has 2-5, or more preferably 2-4, even more preferably 2-3 hydroxy groups. In a preferred embodiment, the polyol is a polyether-based polyol or a polyester-based polyol, more preferably a polyether- or a polyester polyol, even more preferably a polyether polyol. The polyether polyol is typically based on propylene oxide, polyethylene oxide, or tetrahydrofurane. The polyol preferably has an OH-number which is in the range of 20-600 mg KOH/g, more preferably 350-450 mg KOH/g, based on the total polyol component (i). The determination of the OH-number is known to a skilled person.

Typically, the polyol component (i) has a total viscosity of 200-6,500 mPas at 25°C measured according to DIN 53019-1.

In a preferred embodiment, component (i) is present in an amount of 20-85 wt.-%, more preferably 65 - 85 wt.-% based on the total mass of the polyol composition.

Component (ii) acts as a flame-retardant agent. Component (ii) is preferably in solid form.

The polyphosphate according to component (ii) preferably has the formula (I) 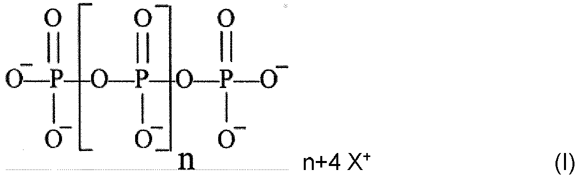
wherein X⁺ is one of Na⁺, K⁺, and NH₄⁺; and
n is integer of 10-100.

The phosphinate according to component (ii) preferably has the structure of formula (II): 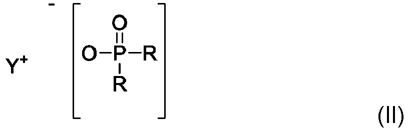
with R being independently from each other H, C₁₋₈-alkyl, particularly methyl, ethyl, and propyl; and
Y being AI(III) or Fe(III).

Particularly, the polyphosphate or the phosphinate salt or the total component (ii) has a bimodal or multi-modal particle size distribution, i.e. there are two (bimodal) or multiple (multimodal) maxima in a graph illustrating the relative amount of particles over the respective particle size. Bi- or multimodal particle size distribution can for example, be obtained by mixing two or more particle qualities with unimodal particle size distribution. Bimodal or multimodal particle size distribution can also be generated in situ during the production. Preferably, the maxima of the lowest particle size is at 1.0-10.0 µm, more preferably, 3.0-8.0 µm. In case of bi-modal size distribution, the maxima of the greatest particle size is 20-60 µm, preferably 30-50 µm. In a preferred embodiment of a bimodal particle size distribution, the difference Δ between the two maxima is 30-40 µm.

In case of a multimodal particle size distribution, the difference Δ between the adjacent maxima is between 10 and 50 µm, more preferably between 30 and 40 µm. The weight ratio of particles having the larger particle diameter and particles having the smaller particle diameter in a bimodal distribution is preferably at 60-30:20-5. In case of a multimodal particle size distribution, the weight ratio of particles having the largest particle diameter to particles having the second largest particle diameter to particles having the third largest particle diameter is preferably at 30-10:15-5:10-5. The weight ratio may be determined via the weight ratio of the relative amount of the local maxima in a graph illustrating the relative amount over the respective particle size (particle size distribution).

The bimodal or multimodal particle size distribution may be obtained by particles of the same compound or by particles of different compounds. Preferably the same compound provides a bimodal or multimodal particle size distribution.

Component (ii) preferably exhibits a characteristic particle size distribution DX. DX values such as D10, D50 and D90 values, characterize a particular sample in view of their relative amount (by mass) of particles according to size. The D10 value defines the particle size threshold up to and including which 10 wt.-% of all particles of the sample can be found, i.e. 10 wt.-% of the particles having a particle size at or below the D10 value. Accordingly, at a certain D50 value 50 wt.-% of the particles having a particle size at or below said value. The DX-values are typically determined in line with ISO 13320-1.

Preferably, component (ii) has a D50 value of 1.0-60.0 µm, more preferably 20-40 µm.

The adjustment of the particle size distribution of component (ii) has significant effects on the viscosity of the polyol composition. Such adjustment of the particle size distribution allows for high amounts of component (ii) without significantly increasing the overall viscosity of the polyol composition.

Preferably, the polyol composition does not exhibit isocyanate-reactive functional groups.

Typically, the content of component (ii) is 5 - 25 wt.-%, more preferably 10-20 wt.-% based on the total mass of the polyol composition.

The polyol composition according to the present invention comprises at least one expandable graphite.

The expandable graphite typically expands at temperatures of 190-250°C, more preferably 200-240°C. Component (iii) preferably has a particle size distribution D50 of 30 - 300 µm, more preferably 90 - 180 µm. Corresponding to component (ii), also component (iii) preferably has a bimodal or multimodal particle size distribution. In a preferred embodiment a bimodal or multimodal particle size distribution differs in their adjacent maxima by Δ = 30-40 µm.

The expandable graphite is preferably obtained from natural graphite treated with acid such as sulphuric acid or nitric acid and at least one oxidizing agent such as peroxide or permanganate. Respective synthetical roots are known to the skilled person.

Preferably, the polyol composition according to the invention contains component (iii) in an amount of 2.5 - 25 wt.-%, preferably 5 - 15 wt.-%, based on the total mass of the polyol composition.

The mass ratio of component (ii) to component (iii) is preferably 0.5-2:0.5-2, more preferably 0.9-1.1:1.

Components (ii) and (iii) preferably together form a bimodal or multimodal particle size distribution.

The polyol composition according to the invention may further contain at least one additive. Suitable additives are e.g. foaming agents, catalysts, emulsifiers and wetting agents. Particularly, suitable emulsifiers are substances based on phosphoric acid, preferably a mixture of phosphoric acid and phosphoric ester polyester such as BYK W-9010.

The catalyst, if present, accelerate the polyurethane forming reaction and are known to the skilled person. Particularly, the catalyst may be tertiary amines such as triethylenediamine, N,N,N,N,N-Pentamethyldiethylenetriamine, N,N-Bis-[3(dimethylamino)propyl]-N',N'-dimethylpropan-1,3-diamin, 1,8-Diazabicyclo[5,4,0]-undec-7-en, N,N,N'-trimethyl-N'-hydroxyethyl-bisaminoethylether, Dimethylethanol-amin, N-Ethylmorpholin, N-Methylimidazol, 1,3,5-Tris[3-Dimenthylamino)propyl]hexahydro-s-triazin and others. A foaming agent, if present, is preferably water.

Component (iv) may be present in amount of 0.05-5 wt.-%, preferably 0.10-2.0 wt.-%, more preferably 0.10-1.0 wt.-% based on the total weight of the polyol composition.

In another aspect, the present invention relates to a reactive polyurethane system comprising
(a) a polyol composition according to the present invention and
(b) at least one polyisocyanate.

The term "polyisocyanate" refers to a compound that comprises at least two isocyanate groups. In a preferred embodiment, polyisocyanate comprises >2 isocyanate groups. More preferably, the polyisocyanate has a functionality of 2-3, more preferably of 2.5-2.9. The polyisocyanate preferably is aromatic or aliphatic. Exemplary polyisocyanates are selected from the group consisting of monomeric methylenedi(phenylisocyanate) MDI or polymeric MDI, methylenedi(cyclohexylisocyanate) (HMDI), hexamethylene diisocyanate HDI and isophorone diisocyanate (IPDI), preferably polymeric MDI.

The NCO content of the polyisocyanate is preferably 30-35%, preferably 30.5-32.5%. Particularly, the polyisocyanate has a viscosity of 100-1,000 mPas, preferably 300-400 mPas at 25°C, measured according to DIN 53019-1.

The ratio of isocyanate groups within component (b) to isocyanate-reactive groups in component (a), particularly OH-groups, is preferably 100:110-160, more preferably 100:120-150, even more preferably 100:120-140.

The invention also refers to a kit comprising
(A) a polyol composition as described above and
(B) at least one polyisocyanate.

The polyol or the reactive polyurethane system or the kit according to the present invention may be used for producing a polyurethane.

Thus, in a further aspect, the present invention relates to a process for producing a polyurethane comprising the steps
(01) providing a polyol according to the invention,
(02) adding at least one polyisocyanate according to the invention to the polyol,
(03) homogenizing the mixture obtained after step (02),
(04) optionally loading the mixture obtained after step (03) with gas, such as air, and
(05) pouring the mixture obtained after step (03) or (04) into a cavity or onto a surface, preferably a mold, thereby allowing the mixture to react.

Steps (03) or (04) are performed by conventional stirrers known in the art. The temperature in step (05) is preferably at 40-100°C.

A further aspect of the present invention is a polyurethane obtainable by the above process.

The polyurethane can be used as a potting material and is particularly a foam, more preferably a closed-cell foam. If the polyurethane foam is closed, air, humidity and pollutants are suppressed to come into contact with the members to be potted.

The polyurethane particularly preferably has a density of 0.2-0.9 g/cm³, more preferably 0.25-0.9 g/cm³, even more preferably 0.25-0.75 g/cm³.

It was surprisingly found that the polyurethane according to the present invention fulfills flammability classification of UL94V0 determined according to UL94 at a density of 0.3 - 0,6 g/cm³.

The polyurethane preferably has a thermal conductivity of 0,0050-0, 1W/m*K, more preferably 0,01-0,08W/m*K measured according to ASTM D 5930.

Due to the low viscosity of the polyol composition and the polyurethane system according to the invention, the flame retardancy and the fire smothering characteristics of the polyurethane, the polyol composition, the reactive polyurethane system, the kit or the polyurethane according to the present invention can be ideally used as potting compound, e.g. for fixing at least one electrical component in a container. The two-component reactive polyurethane system has a low viscosity suitable to entirely fill the space that remains when an electrical component is positioned in a container. Once cured, the polyurethane has a stabilizing effect to the electrical component even if subjected to permanent and strong vibrations, shocks and accelerations while adding only little weight to the overall container.

Particularly, the electrical component is a battery, more preferably a battery pack consisting of several batteries that are placed apart at a certain distance only separated by the polyurethane according to the invention.

Thus, the present invention also relates to a module comprising at least one electrical component, wherein the at least one electrical component is potted in a polyurethane according to the present invention. Here, the polyurethane according to the invention is in direct contact with at least one electrical component, particularly at least one electrochemical cell, more preferably, at least one battery. More particularly, the polyurethane according to the invention is associated with at least one electrical component, particularly at least one electrochemical cell.

The present invention is defined by the following items:
1. Polyol composition comprising
   (i) at least one polyol,
   (ii) at least one of a polyphosphate and phosphinate salt,
   (iii) at least one expandable graphite, and
   (iv) optionally at least one additive.
2. Polyol composition according to item 1, wherein the polyol composition is free of halogen such as Fl, Cl, Br, I and/or halides.
3. Polyol composition according to item 1 or 2, wherein the polyol has 2-5, preferably 2-4, more preferably 2-3 hydroxy groups.
4. Polyol composition according to any of the preceding items, wherein the polyol is a polyether polyol.
5. Polyol composition according to any of the preceding items, wherein the polyether polyol is based on propylene oxide, polyethylene oxide, and/or tetrahydrofurane.
6. Polyol composition according to any of the preceding items, wherein the OH-number is 20-600 mg KOH/g, more preferably 350-450 mg KOH/g.
7. Polyol composition according to any of the preceding items, wherein the viscosity of the polyol is 200-6,500 mPas at 25°C measured according to DIN 53019-1.
8. Polyol composition according to any of the preceding items, wherein the content of component (i) is 20 - 85 wt.-%, more preferably 65 - 85 wt.-% based on the total mass of the polyol composition.
9. Polyol composition according to any of the preceding items, wherein component (ii) is in solid form.
10. Polyol composition according to any of the preceding items, wherein the polyphosphate has the formula (I): 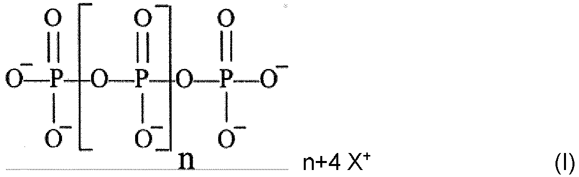
   wherein X⁺ is one of Na⁺, K+, and NH₄⁺; and
   n is integer of 10-100.
11. Polyol composition according to any of the preceding items, wherein the phosphinate has the formula (II): 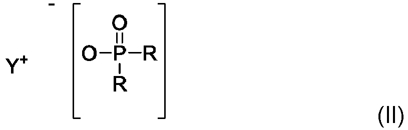
   with R being independently from each other H, C₁₋₈-alkyl, particularly methyl, ethyl, and propyl; and
   Y being AI(III) or Fe(III).
12. Polyol composition according to any of the preceding items, wherein component (ii) has no isocyanate-reactive functional groups.
13. Polyol composition according to any of the preceding items, wherein the content of component (ii) is 5 - 25 wt.-% based on the total mass of the polyol composition.
14. Polyol composition according to any of the preceding items, wherein component (ii) has a d50 diameter of 1.0 - 60 µm, preferably 20 - 40 µm.
15. Polyol composition according to any of the preceding items, wherein component (i) has a bi- or multimodal particle size distribution.
16. Polyol composition according to any of the preceding items, wherein the expandable graphite expands at temperatures of 190-250°C, more preferably 200-240°C.
17. Polyol composition according to any of the preceding items, wherein component (iii) has a particle size distribution d50 of 30 - 300 µm, more preferably 90 -180 µm.
18. Polyol composition according to any of the preceding items, wherein component (iii) has a bi- or multimodal particle size distribution.
19. Polyol composition according to any of the preceding items, wherein component (iii) is prepared from natural graphite treated with acid such as sulphuric acid or nitric acid and at least one oxidizing agent, such as peroxide or permanganate.
20. Polyol composition according to any of the preceding items, wherein the content of component (iii) is 2.5 - 25 wt.-%, preferably 5 - 15. wt.-% based on the total mass of the polyol composition.
21. Polyol composition according to any of the preceding items, wherein the mass ratio of component (ii):(iii) is 0.5-2: 0.5-2, preferably 0.9-1.1 : 1.
22. Polyol composition according to any of the preceding items, wherein components (ii) and (iii) together have a bi- or multimodal particle size distribution.
23. Polyol composition according to any of the preceding items, wherein the additive is a foaming agent, a catalyst, an emulsifier, or a wetting agent.
24. Polyol composition according to any of the preceding items, wherein the foaming agent is water.
25. Polyol composition according to any of the preceding items, wherein the catalyst is triethylenediamine.
26. Reactive polyurethane system comprising
   (a) a polyol composition according to any of items 1-25; and
   (b) at least one polyisocyanate.
27. Reactive polyurethane system according to item 26, wherein the polyisocyanate (b) is selected from the group consisting of an aromatic or aliphatic polyisocyanate, particularly monomeric methylenedi(phenylisocyanate) MDI or polymeric MDI, methylenedi(cyclohexylisocyanate) (HMDI), hexamethylene diisocyanate HDI and isophorone diisocyanate (IPDI), preferably polymeric MDI.
28. Reactive polyurethane system according to items 26 or 27, wherein NCO-content of the polyisocyanate is 30-35%, preferably 30.5-32.5%.
29. Reactive polyurethane system according to any of items 26-28, wherein the polyisocyanate has a viscosity of 100-1,000 mPas, preferably 300-400 mPas at 25°C, measured according to DIN 53019-1.
30. Reactive polyurethane system according to any of items 26-29, wherein the polyisocyanate has a functionality of 2-3, preferably 2.5-2.9.
31. Reactive polyurethane system according to any of items 26-30, wherein the ratio of isocyanate groups within component (b) to isocyanate-reactive groups in component (a), particularly OH-groups, is 100:110-160, more preferably 100:120-150, even more preferably 100:120-140.
32. Kit comprising
   (A) a polyol composition according to any of items 1-25 and
   (B) at least one polyisocyanate.
33. Process for producing a polyurethane comprising the steps of mixing the polyol composition according to any of items 1-25 and at least one polyisocyanate, preferably at temperatures of 40-100°C.
34. Polyurethane obtainable by a process according to item 33.
35. Polyurethane according to item 33 or 34 which is a foam.
36. Polyurethane according to any of items 33-35 which has a density of 0.2-0.9 g/cm³, preferably 0.25-0.9 g/cm³, more preferably 0.25-0.75 g/cm³.
37. Polyurethane according to any of items 33-36 which has flammability classification of UL94V0 determined according to UL94 at a density of 0.3 - 0.6 g/cm³.
38. Use of a polyol composition according to any of items 1-25, a reactive polyurethane system according to any of items 26-31, a kit according to item 32, a polyurethane according to any of items 34-37 for fixing at least one electrical component in a container.
39. Use according to item 38, wherein the electrical component is an electrochemical cell, in particular a battery.
40. Module comprising at least one electrical component characterized in that the at least one electrical component is potted in a polyurethane according to any of items 34-37.
41. Polyurethane according to any of items 34-37 associated with at least one electrical component, particularly at least one electrochemical cell.

## Claims

1. Polyol composition comprising
(i) at least one polyol, preferably a polyether polyol, more preferably based on propylene oxide, polyethylene oxide, and/or tetrahydrofurane,
(ii) at least one of a polyphosphate and phosphinate salt,
(iii) at least one expandable graphite, and
(iv) optionally at least one additive, such as a foaming agent, a catalyst, an emulsifier, or a wetting agent.

2. Polyol composition according to claim 1, wherein the polyol has 2-5, preferably 2-4, more preferably 2-3 hydroxy groups and/or the OH-number is 20-600 mg KOH/g, preferably 350-450 mg KOH/g.

3. Polyol composition according to any of the preceding claims, wherein the content of component (i) is 20 - 85 wt.-%, more preferably 65 - 85 wt.-% based on the total mass of the polyol composition.

4. Polyol composition according to any of the preceding claims, wherein component (ii) is in solid form, and/or
has the formula (I): 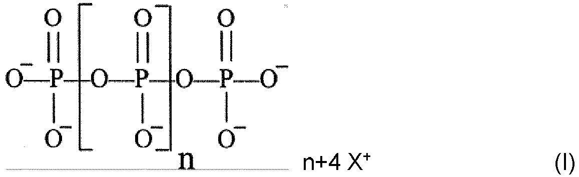
wherein X⁺ is one of Na⁺, K+, and NH₄⁺; and
n is integer of 10-100, and/or
has the formula (II): 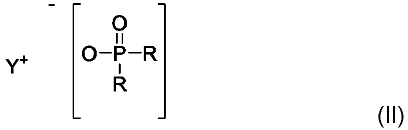
with R being independently from each other H, C₁₋₈-alkyl, particularly methyl, ethyl, and propyl; and
Y being Al(III) or Fe(III).

5. Polyol composition according to any of the preceding claims, wherein component (ii) has no isocyanate-reactive functional group, and/or
is present in amounts of 5 - 25 wt.-% based on the total mass of the polyol composition, and/or
has a d50 diameter of 1.0 - 60 µm, preferably 20 - 40 µm.

6. Polyol composition according to any of the preceding claims, wherein the content of component (iii) is 2.5 - 25 wt.-%, preferably 5 - 15. wt.-% based on the total mass of the polyol composition.

7. Polyol composition according to any of the preceding claims, wherein the mass ratio of component (ii):(iii) is 0.5-2: 0.5-2, preferably 0.9-1.1 : 1, and/or
wherein components (ii) and (iii) together have a bi- or multimodal particle size distribution.

8. Reactive polyurethane system comprising
(a) a polyol composition according to any of claim 1-7; and
(b) at least one polyisocyanate, preferably selected from the group consisting of an aromatic or aliphatic polyisocyanate, more particularly monomeric methylenedi(phenylisocyanate) MDI or polymeric MDI, methylenedi(cyclohexylisocyanate) (HMDI), hexamethylene diisocyanate HDI and isophorone diisocyanate (IPDI), even more preferably polymeric MDI.

9. Kit comprising
(A) a polyol composition according to any of claims 1-7 and
(B) at least one polyisocyanate.

10. Process for producing a polyurethane comprising the steps of mixing the polyol composition according to any of claims 1-7 and at least one polyisocyanate, preferably at temperatures of 40-100°C.

11. Polyurethane obtainable by a process according to claim 10, which is particularly a foam, and/or
has a density of 0.2-0.9 g/cm³, preferably 0.25-0.9 g/cm³, more preferably 0.25-0.75 g/cm³, and/or
has flammability classification of UL94V0 determined according to UL94 at a density of 0.3 - 0.6 g/cm³.

12. Use of a polyol composition according to any of claims 1-7, a reactive polyurethane system according to claim 8, a kit according to claim 9, or a polyurethane according to claim 11 for fixing at least one electrical component, preferably an electrochemical cell, in particular a battery, in a container.

13. Module comprising at least one electrical component **characterized in that** the at least one electrical component is potted in a polyurethane according to claim 11.

14. Polyurethane according to claim 11 associated with at least one electrical component, particularly at least one electrochemical cell.
